# EUROPEAN PATENT SPECIFICATION

(11) **EP 3 043 236 B1**
(45) Date of publication and mention of the grant of the patent: **12.06.2019**
(21) Application number: 15203205.8
(22) Date of filing: 30.12.2015
(51) Int. Cl.: G06F 1/16, G06K 9/00, H03K 17/96, H04M 1/02, G06F 21/32, G06F 3/044

(54) **METHOD AND APPARATUS FOR IMPLEMENTING A STACKED TOUCH KEY AND FINGERPRINT SENSOR**
VERFAHREN UND VORRICHTUNG ZUR IMPLEMENTIERUNG EINER GESTAPELTEN TASTSCHALTER- UND FINGERABDRUCKERKENNUNGSSENSOR
PROCÉDÉ ET APPAREIL POUR LA MISE EN OEUVRE D'UN CAPTEUR EN COUCHES POUR TOUCHE TACTILE ET DISPOSITIF D'IDENTIFICATION D'EMPREINTES DIGITALES

(30) Priority: 07.01.2015 CN 201510008098; 30.01.2015 CN 201510051711
(43) Date of publication of application: 13.07.2016
(73) Proprietor: Xiaomi Inc., Beijing 100085 (CN)
(72) Inventor: JIANG, Zhongsheng, BEIJING 100085 (CN); YANG, Kun, BEIJING 100085 (CN); TAO, Jun, BEIJING 100085 (CN)
(74) Representative: Cabinet Beau de Loménie

(56) References cited:
- WO-A1-2014/143065
- US-A1- 2014 341 447
- US-A1- 2015 022 495

## Description

### TECHNICAL FIELD

The present invention generally relates to the technical field of structural design of terminal devices, and more particularly, to a method and an apparatus for implementing touch key and fingerprint identification and a terminal device.

### BACKGROUND

With continuous increase of functions of terminal devices, such as mobile phones, more and more new functions of the terminal devices give more convenience for a user.

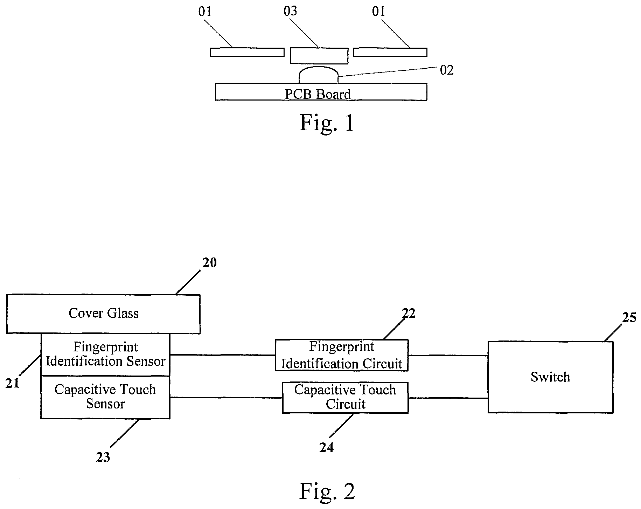

Conventionally, the fingerprint identification function is favored by respective terminal device manufacturers. The current terminal devices, such as mobile phones and tablet computers, when designing the fingerprint identification function, substantially adopt physical keys to incorporate the fingerprint identification function so as to achieve the key compatible with the fingerprint identification, the sectional view thereof is shown in Fig. 1. Generally, when adopting such design, since the physical key 02 is enabled only when being pressed to a constant stroke, it is necessary to excavate a corresponding hole on a cover glass 01; in this way, when the user touches a fingerprint identification sensor 03 slightly, the system can only identify the fingerprint; and when the user presses the fingerprint identification sensor 03 to a certain stoke, the physical key 02 is triggered, then the system can identify two actions including the fingerprint and the key, and then execute the corresponding actions according to requirements by an upper layer. However, the above structure may not only affect an appearance aesthetic of the whole terminal device and a structural strength of the cover glass, but also affect the convenience of the user operation.,

Document US 2014/341447 discloses a method of controlling a portable device able to selectively activate the functions of a multifunctional control button.

Document WO 2014/143065 discloses an electronic device that includes a function button and is adapted to obtain fingerprint information and/or to determine an applied force when the function button is depressed.

### SUMMARY

In order to solve the problems in the related art, the embodiments of the present invention provide a method and an apparatus for implementing touch key and fingerprint identification and a terminal device, which are used for integrating the touch key and fingerprint identification, improving an appearance aesthetic of the whole machine, improving a structural strength of the cover glass, and improving the experience of the user.

According to a first aspect of embodiments of the present invention, there is provided an apparatus for implementing touch key and fingerprint identification and a terminal device, including:
a fingerprint identification sensor used for collecting fingerprint information applied on a cover glass of a terminal device;
a fingerprint identification circuit connected with the fingerprint identification sensor and used for analyzing and processing the fingerprint information collected by the fingerprint identification sensor to obtain a fingerprint analysis result;
a capacitive touch sensor used for collecting a capacitance generated on the cover glass;
a capacitive touch circuit connected with the capacitive touch sensor and used for analyzing the capacitance collected by the capacitive touch sensor to obtain a capacitance variation; and
a switch used for controlling the fingerprint identification sensor and the fingerprint identification circuit to turn on and controlling the capacitive touch sensor and the capacitive touch circuit to be disconnected when receiving a turn-on signal; and controlling the capacitive touch sensor and the capacitive touch circuit to turn on and controlling the fingerprint identification sensor and the fingerprint identification circuit to be disconnected when receiving a cut-off signal;
wherein,
the fingerprint identification sensor comprises multiple-layers of circuits providing a shielding function reducing capacitive touch signals, said multiple-layers of circuits being in a float status when the switch receives the cut-off signal;
the fingerprint identification sensor is provided below the cover glass;
the capacitive touch sensor has a high Signal-Noise-Ratio SNR; and
the capacitive touch sensor is provided below the fingerprint identification sensor.

In one embodiment, the apparatus further includes:
a host processor forming a series loop with the fingerprint identification circuit and the fingerprint identification sensor, and used for sending the turn-on signal or the cut-off signal to the switch and performing an authentication according to the fingerprint analysis result obtained by the fingerprint identification circuit; and connected with the capacitive touch circuit and used for judging whether the cover glass receives a touch key operation according to the capacitance variation obtained by the capacitive touch circuit.

In one embodiment, the host processor includes:
a communication interface used for sending the turn-on signal or the cut-off signal to the switch;
a first processor forming a series loop with the fingerprint identification circuit and the fingerprint identification sensor and used for comparing the fingerprint analysis result obtained by the fingerprint identification circuit with pre-stored fingerprint data so as to determine an identity of a current user; and
a second processor connected with the capacitive touch circuit, and used for judging whether the capacitance variation obtained by the capacitive touch circuit exceeds a predefined value and determining that the cover glass receives a touch key operation when the capacitance variation exceeds the predefined value.

In one embodiment, when the fingerprint identification sensor and the fingerprint identification circuit are disconnected, the fingerprint identification sensor is in a float status.

According to a second aspect of embodiments of the present invention, there is provided a terminal device, including any apparatus for implementing touch key and fingerprint identification provided by the above embodiments.

According to a third aspect of embodiments of the present invention, there is provided a method for implementing touch key and fingerprint identification, including:
when a switch receiving a turn-on signal, a fingerprint identification sensor collecting fingerprint information applied on a cover glass, and a fingerprint identification circuit connected with the fingerprint identification sensor analyzing and processing the collected fingerprint information to obtain a fingerprint analysis result; and
when the switch receiving a cut-off signal, a capacitive touch sensor collecting a capacitance generated on the cover glass and a capacitive touch circuit connected with the capacitive touch sensor analyzing the collected capacitance to obtain a capacitance variation;
wherein,
the fingerprint identification sensor comprises multiple-layers of circuits providing a shielding function reducing capacitive touch signals, the multiple-layers of circuits being in a float status when the switch receives the cut-off signal;
the fingerprint identification sensor is provided below the cover glass;
the capacitive touch sensor has a high Signal-Noise-Ratio SNR; and
the capacitive touch sensor is provided below the fingerprint identification sensor.

In one embodiment, the method further includes:
performing an authentication to the obtained fingerprint analysis result; and
judging whether the cover glass receives a touch key operation according to the obtained capacitance variation.

In one embodiment, the performing the authentication to the obtained fingerprint analysis result includes:
comparing the obtained fingerprint analysis result with pre-stored fingerprint data so as to determine an identity of a current user; and
judging whether the cover glass receives a touch key operation according to the obtained capacitance variation includes:
judging whether the obtained capacitance variation exceeds a predefined value, and determining that the cover glass receives a touch key operation when the capacitance variation exceeds the predefined value.

According to an example of the present invention, there is provided an apparatus for implementing touch key and fingerprint identification, including:
a processor; and
a memory for storing instructions executable by the processor;
wherein the processor is configured to:
   when receiving a turn-on signal, collect fingerprint information applied on a cover glass, and analyze and process the collected fingerprint information to obtain a fingerprint analysis result; and
   when receiving a cut-off signal, collect a capacitance generated on the cover glass and analyze the collected capacitance to obtain a capacitance variation.

The present invention also provides a computer program including instructions, which when being executed on a processor of an apparatus and more particularly of a terminal performs the method provided in the foregoing third aspect.

These programs can use any programming language, and be in the form of source code, object code, or code intermediate between source code and object code, such as in a partially compiled form, or in any other desirable form.

The invention also provides a computer readable data medium including instructions of a computer program as mentioned above.

The data medium may be any entity or device capable of storing the program. For example, the medium may comprise storage means, such as read only memory (ROM), e.g. a compact disk (CD) ROM or a microelectronic circuit ROM, or indeed magnetic recording means, e.g. a floppy disk or a hard disk.

Furthermore, the data medium may be a transmissible medium such as an electrical or optical signal, suitable for being conveyed via an electrical or optical cable, by radio, or by other means. The program of the invention may in particular be downloaded from an Internet type network.

Alternatively, the data medium may be an integrated circuit in which the program is incorporated, the circuit being adapted to execute or to be used in the execution of the method in question.

The technical scheme according to the embodiments of the present invention may have the following beneficial effects:
in the above technical solutions, the capacitive touch sensor is provided below the fingerprint identification sensor, the operation statuses of the capacitive touch sensor and the fingerprint identification sensor are controlled by the switch according to requirements by the user or the upper application, meanwhile, the operation of the capacitive touch sensor is not influenced by the fingerprint identification sensor by virtue of the high SNR (Signal-Noise Ratio) of the capacitive touch sensor, and the operation of the fingerprint identification sensor is not influenced by the capacitive touch sensor. In this way, the fingerprint identification and the touch key are integrated and compatible. In addition, it is unnecessary to excavate a hole in the cover glass for placing the fingerprint identification sensor, thereby an appearance aesthetic of the whole machine is improved, a structural strength of the cover glass is improved, and the experience of the user is improved.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a sectional view of a touch key structure of the conventional terminal device.
Fig. 2 is a block diagram illustrating an apparatus for implementing touch key and fingerprint identification, according to an exemplary embodiment.
Fig. 3 is a block diagram illustrating another apparatus for implementing touch key and fingerprint identification, according to an exemplary embodiment.
Fig. 4 is a flow chart illustrating a method for implementing touch key and fingerprint identification, according to an exemplary embodiment.
Fig. 5 is a flow chart illustrating another method for implementing touch key and fingerprint identification, according to an exemplary embodiment.
Fig. 6 is a block diagram illustrating an apparatus suitable for implementing touch key and fingerprint identification, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The embodiments of the present invention provide an apparatus for implementing touch key and fingerprint identification. As shown in Fig. 2, the apparatus includes:
a fingerprint identification sensor 21 provided below a cover glass 20 of a terminal device and used for collecting fingerprint information applied on the cover glass 20;
a fingerprint identification circuit 22 connected with the fingerprint identification sensor 21 and used for analyzing and processing the fingerprint information collected by the fingerprint identification sensor 21 to obtain a fingerprint analysis result;
a capacitive touch sensor 23 provided below the fingerprint identification sensor 21 and used for collecting a capacitance generated on the cover glass 20;
a capacitive touch circuit 24 connected with the capacitive touch sensor 23 and used for analyzing the capacitance collected by the capacitive touch sensor 23 to obtain a capacitance variation; and
a switch 25 used for controlling the fingerprint identification sensor 21 and the fingerprint identification circuit 22 to turn on and controlling the capacitive touch sensor 23 and the capacitive touch circuit 24 to be disconnected when receiving a turn-on signal; and controlling the capacitive touch sensor 23 and the capacitive touch circuit 24 to turn on and controlling the fingerprint identification sensor 21 and the fingerprint identification circuit 22 to be disconnected when receiving a cut-off signal.

In this embodiment, the capacitive touch sensor is provided below the fingerprint identification sensor, thus a distance from the fingerprint identification sensor to the finger is relatively short. When performing fingerprint identification, since a lot of multiple-layer circuits inside the fingerprint identification sensor can provide a shielding function, signals of the capacitive touch sensor reduces greatly, thereby it is unable to achieve the touch function. In addition, when using the touch key function, the multiple-layer circuits inside the fingerprint identification sensor are in a float status. Although the distance of the capacitive touch sensor from the finger is relatively far, the thickness of the fingerprint identification sensor will not have a great significance on the signals of the capacitive touch sensor due to a relatively high SNR of the capacitive touch sensor. In this way, the capacitive touch key function is achieved. Thereby, the stacking manner of providing the capacitive touch sensor below the fingerprint identification sensor is capable of making the capacitive touch sensor and the fingerprint identification sensor not affect each other during operations, so as to achieve a real integration of the fingerprint identification and the touch key.

In the apparatus for implementing touch key and fingerprint identification provided by this technical solution, the capacitive touch sensor is provided below the fingerprint identification sensor, the operation statuses of the capacitive touch sensor and the fingerprint identification sensor are controlled by the switch according to requirements by the user or the upper application. Meanwhile, the operation of the capacitive touch sensor is not influenced by the fingerprint identification sensor by virtue of the high SNR (Signal-Noise Ratio) of the capacitive touch sensor, and the operation of the fingerprint identification sensor is not influenced by the capacitive touch sensor. In this way, the fingerprint identification and the touch key are integrated and compatible. In addition, it is unnecessary to excavate a hole in the cover glass for placing the fingerprint identification sensor, thereby an appearance aesthetic of the whole machine is improved, a structural strength of the cover glass is improved, and the experience of the user is improved.

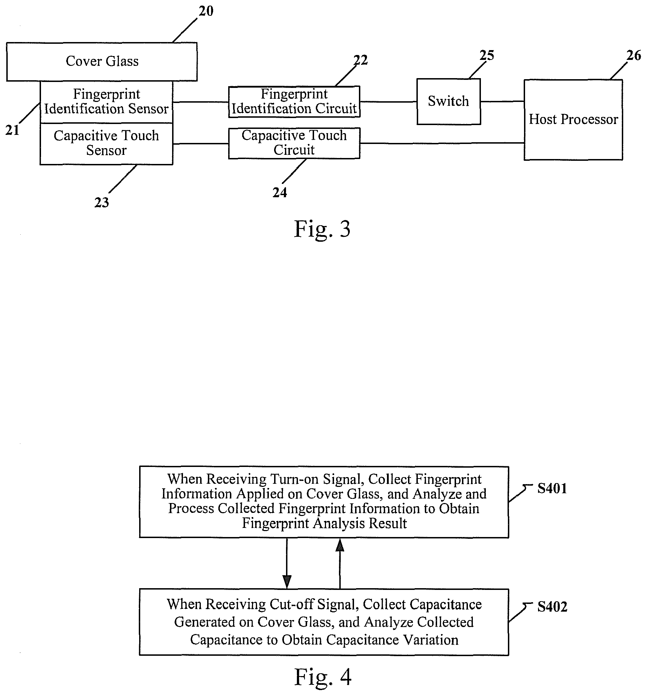

In one embodiment, as shown in Fig. 3, the above apparatus further includes a host processor 26, which forms a series loop with the fingerprint identification circuit 22 and the fingerprint identification sensor 21, and is used for sending the turn-on signal or the cut-off signal to the switch 25 and performing an authentication according to the fingerprint analysis result obtained by the fingerprint identification circuit 22. For example, pre-stored fingerprint data may include identity of each user and his/her fingerprint feature data; after extracting the fingerprint feature from the fingerprint analysis result, the extracted fingerprint feature is compared with the fingerprint feature of each user in the fingerprint data, so as to determine an identity of the current user. The host processor 26 is also connected with the capacitive touch circuit 24 and is used for judging whether the cover glass 20 receives a touch key operation according to the capacitance variation obtained by the capacitive touch circuit 24.

The host processor 26 may send the turn-on signal or the cut-off signal to the switch 25 according to an instruction of the user or the requirement by the upper application. For example, when the user desires to identify the fingerprint or the upper application wants to identify the fingerprint, the user or the upper application may instruct the host processor 26 to send the turn-on signal to the switch 25; and when the user desires to perform a key operation or the upper application wants to perform a key operation, the user or the upper application may instruct the host processor 26 to send the cut-off signal to the switch 25.

In one embodiment, the host processor 26 includes:
a communication interface used for sending the turn-on signal or the cut-off signal to the switch 25;
a first processor forming a series loop with the fingerprint identification circuit 22 and the fingerprint identification sensor 21 and used for comparing the fingerprint analysis result obtained by the fingerprint identification circuit 22 with pre-stored fingerprint data so as to determine an identity of a current user; and
a second processor connected with the capacitive touch circuit 24, and used for judging whether the capacitance variation obtained by the capacitive touch circuit 24 exceeds a predefined value and determining that the cover glass receives a touch key operation when the capacitance variation exceeds the predefined value.

In one embodiment, when the fingerprint identification sensor 21 and the fingerprint identification circuit 22 are disconnected, the fingerprint identification sensor 21 is in a float status.

The operation principle of the apparatus for implementing touch key and fingerprint identification is as follows.

The host processor 26 sends a control signal (including a turn-on signal or a cut-off signal) to the switch 25 via the communication interface to control the operation statuses of the fingerprint identification sensor 21 and the capacitive touch sensor 23. When the host processor 26 sends a turn-on signal to the switch 25, the switch 25 controls the fingerprint identification sensor 21 and the fingerprint identification circuit 22 to turn on according to the received turn-on signal, and controls the capacitive touch sensor 23 and the capacitive touch circuit 24 to disconnect. At this time, the fingerprint identification sensor 21 is in an operating state. When a user touches an upper surface of the cover glass 20 by his/her finger, the fingerprint identification sensor 21 collects fingerprint information on the cover glass 20, and sends the fingerprint information to the fingerprint identification circuit 22. Then the fingerprint identification circuit 22 analyzes and processes the fingerprint information to obtain a fingerprint identification result, and sends the fingerprint identification result to a first processor in the host processor 26. Then the first processor compares the received fingerprint identification result with the pre-stored fingerprint data to determine an identity of the current user. Meanwhile, since there are multiple layers of plenty of circuits provided inside the fingerprint identification sensor 21, and these circuits will directly perform a shielding function, the capacitive touch signals will reduce greatly, and thus the touch function cannot be achieved. Thereby the operation of the fingerprint identification sensor 21 will not influent the capacitive touch sensor 23. When the host processor 26 sends a cut-off signal to the switch 25, the switch 25 controls the fingerprint identification sensor 21 and the finger identification circuit 22 to disconnect, and controls capacitive touch sensor 23 and the capacitive touch circuit 24 to turn on. At this time the fingerprint identification sensor 21 is in a float status, i.e., is disconnected with the host processor 26, and the capacitive touch sensor 23 starts to operate. When the user touches the upper surface of the cover glass 20 by his/her finger, the capacitive touch sensor 23 collects the capacitance generated on the cover glass 20. Then the capacitive touch circuit 24 analyzes the capacitance collected by the capacitive touch sensor 23 so as to obtain a capacitance variation, and sends the capacitance variation to a second processor in the host processor 26. Then the second processor compares the received capacitance variation with a predefined value, and when the capacitance variation exceeds the predefined value, the second processor determines that the cover glass 20 receives a touch key operation.

In the embodiment, the host processor sends the control signal to the switch, to control the operation statuses of the capacitive touch sensor and the fingerprint identification sensor, such that the operation of the capacitive touch sensor is not influenced by the fingerprint identification sensor, and the operation of the fingerprint identification sensor is not influenced by the capacitive touch sensor, thereby achieving the integration of the fingerprint identification with the touch key of the terminal device and achieving the purpose of compatibility. In addition, it is unnecessary to excavate a hole in the cover glass for placing the fingerprint identification sensor, thereby an appearance aesthetic of the whole machine is improved, a structural strength of the cover glass is improved, and the experience of the user is improved.

In addition, as for the cover glass of the terminal device provided by the present invention, the cover glasses, whatever an integral cover glass, or a cover glass excavated with a hole for placing the fingerprint identification sensor, are all suitable for the technical solution provided by the present invention. Thereby, the terminal device provided by the present invention does not need to design a cover glass having a special style, and thus the manufacture is very simple and convenient.

In one embodiment, the present invention also provides a terminal device, which includes the apparatus for implementing touch key and fingerprint identification provided by any one of the above-mentioned several embodiments.

Corresponding to the apparatus for implementing touch key and fingerprint identification provided by the above-mentioned embodiments, the embodiments of the present invention also provides a method for implementing touch key and fingerprint identification. As shown in Fig. 4, the method includes step S401-step S402.

In step S401, when receiving a turn-on signal, fingerprint information applied on a cover glass is collected, and the collected fingerprint information is analyzed and processed to obtain a fingerprint analysis result.

In step S402, when receiving a cut-off signal, a capacitance generated on the cover glass is collected, and the collected capacitance is analyzed to obtain a capacitance variation.

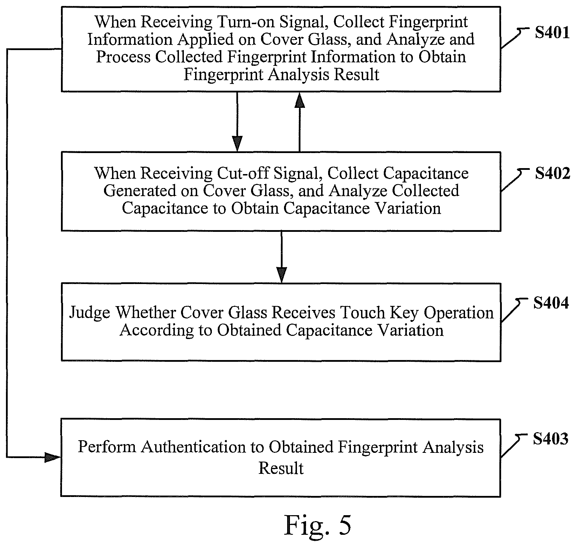

In one embodiment, as shown in Fig. 5, after implementing the step S401, the above method may further include step S403: performing an authentication to the obtained fingerprint analysis result. Alternatively, after implementing the step S402, the above method may further include step S404: judging whether the cover glass receives a touch key operation according to the obtained capacitance variation.

In the above embodiments, the step S403 may be implemented by comparing the obtained fingerprint analysis result with pre-stored fingerprint data so as to determine an identity of a current user. The step S404 may be implemented by judging whether the obtained capacitance variation exceeds a predefined value, and determining that the cover glass receives a touch key operation when the capacitance variation exceeds the predefined value.

By using the method for implementing touch key and fingerprint identification, the fingerprint identification function and the capacitance touch function may be controlled to be performed according to the received control signal based on the requirements by the user or the upper application, and then whether the touch key operation is received is judged according to the fingerprint information and the capacitance variation and the identity of the current user is determined, thereby the integration of the fingerprint identification with the touch key of the terminal device is achieve. The purpose of compatibility is achieved, and an appearance aesthetic of the whole machine and a structural strength of the cover glass are improved, and additionally, the user only needs to perform a simple touch press operation with an arbitrary force on the cover glass, thus it is convenient for use by the user.

In an exemplary embodiment, the present invention also provides an apparatus for implementing touch key and fingerprint identification, including:
a processor; and
a memory for storing instructions executable by the processor;
wherein the processor is configured to:
   when receiving a turn-on signal, collect fingerprint information applied on a cover glass, and analyze and process the collected fingerprint information to obtain a fingerprint analysis result; and
   when receiving a cut-off signal, collect a capacitance generated on the cover glass and analyze the collected capacitance to obtain a capacitance variation.

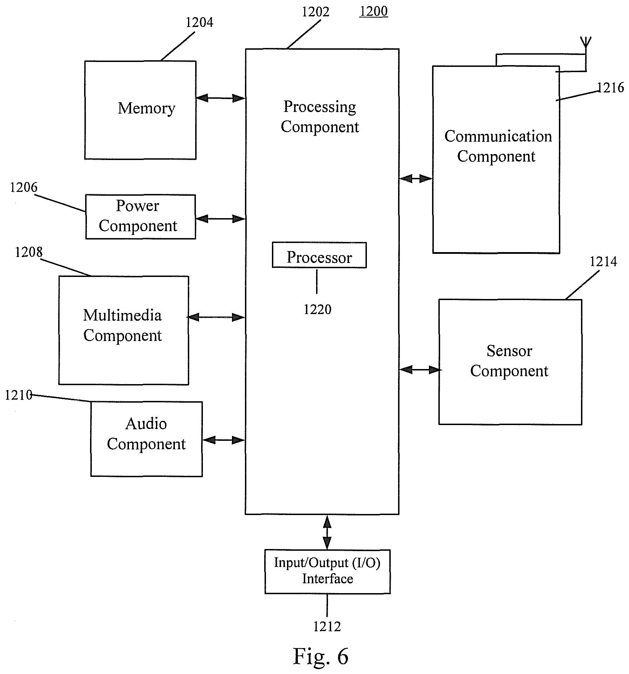

Fig. 6 is a block diagram of a device 1200 for implementing touch key and fingerprint identification, according to an exemplary embodiment. For example, the device 1200 may be a mobile phone, a computer, a digital broadcast terminal, a messaging device, a gaming console, a tablet, a medical device, exercise equipment, a personal digital assistant, and the like.

Referring to Fig. 6, the device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The multimedia component 1208 includes a screen providing an output interface between the device 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200. For instance, the sensor component 1214 may detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the device 1200 and other devices. The device 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 in the device 1200, for performing the above-described methods. For example, the non-transitory computer-readable storage medium may be a ROM, a RAM, a CD-ROM, a magnetic tape, a floppy disc, an optical data storage device, and the like.

## Claims

1. An apparatus for implementing touch key and fingerprint identification, comprising:
a fingerprint identification sensor (21) used for collecting fingerprint information applied on a cover glass (20) of a terminal device;
a fingerprint identification circuit (22) connected with the fingerprint identification sensor (21) and used for analyzing and processing the fingerprint information collected by the fingerprint identification sensor (22) to obtain a fingerprint analysis result;
a capacitive touch sensor (23) used for collecting a capacitance generated on the cover glass (20);
a capacitive touch circuit (24) connected with the capacitive touch sensor (23) and used for analyzing the capacitance collected by the capacitive touch sensor (23) to obtain a capacitance variation; and
a switch (25) used for controlling the fingerprint identification sensor (21) and the fingerprint identification circuit (22) to turn on and controlling the capacitive touch sensor (23) and the capacitive touch circuit (24) to be disconnected when receiving a turn-on signal; and controlling the capacitive touch sensor (23) and the capacitive touch circuit (24) to turn on and controlling the fingerprint identification sensor (21) and the fingerprint identification circuit (22) to be disconnected when receiving a cut-off signal;
**characterized in that**:
said fingerprint identification sensor (21) comprises multiple-layers of circuits providing a shielding function reducing capacitive touch signals, said multiple-layers of circuits being in a float status when the switch (25) receives the cut-off signal;
said fingerprint identification sensor (21) is provided below said cover glass (20);
said capacitive touch sensor (23) has a high Signal-Noise-Ratio SNR; and
said capacitive touch sensor (23) is provided below said fingerprint identification sensor (21).

2. The apparatus of claim 1, further comprising:
a host processor (26) forming a series loop with the fingerprint identification circuit (22) and the fingerprint identification sensor (21), and used for sending the turn-on signal or the cut-off signal to the switch (26) and performing an authentication according to the fingerprint analysis result obtained by the fingerprint identification circuit (22); and connected with the capacitive touch circuit (24) and used for judging whether the cover glass (20) receives a touch key operation according to the capacitance variation obtained by the capacitive touch circuit (24).

3. The apparatus of claim 2 wherein,
the host processor (26) comprises:
a communication interface used for sending the turn-on signal or the cut-off signal to the switch (25);
a first processor forming a series loop with the fingerprint identification circuit (22) and the fingerprint identification sensor (21) and used for comparing the fingerprint analysis result obtained by the fingerprint identification circuit (22) with pre-stored fingerprint data so as to determine an identity of a current user; and
a second processor connected with the capacitive touch circuit (24), and used for judging whether the capacitance variation obtained by the capacitive touch circuit (24) exceeds a predefined value and determining that the cover glass (20) receives a touch key operation when the capacitance variation exceeds the predefined value.

4. The apparatus of any of claims 1 to 3, wherein,
when the fingerprint identification sensor (21) and the fingerprint identification circuit (22) are disconnected, the fingerprint identification sensor (21) is in a float status.

5. A terminal device, comprising the apparatus for implementing touch key and fingerprint identification of any one of claims 1-4.

6. A method for implementing touch key and fingerprint identification comprising:
when a switch (25) receiving a turn-on signal, a fingerprint identification sensor (21) collecting fingerprint information applied on a cover glass (20), and a fingerprint identification circuit (22) connected with the fingerprint identification sensor (21) analyzing and processing the collected fingerprint information to obtain a fingerprint analysis result (S401); and
when the switch (25) receiving a cut-off signal, a capacitive touch sensor (23) collecting a capacitance generated on the cover glass (20) and a capacitive touch circuit (24) connected with the capacitive touch sensor (23) analyzing the collected capacitance to obtain a capacitance variation (S402);
**characterized in that**:
said fingerprint identification sensor (21) comprises multiple-layers of circuits providing a shielding function reducing capacitive touch signals, said multiple-layers of circuits being in a float status when the switch (25) receives the cut-off signal;
said fingerprint identification sensor (21) is provided below said cover glass (20);
said capacitive touch sensor (23) has a high Signal-Noise-Ratio SNR; and
said capacitive touch sensor (23) is provided below said fingerprint identification sensor (21).

7. The method of claim 6, comprising:
performing an authentication to the obtained fingerprint analysis result (S403); and
judging whether the cover glass (20) receives a touch key operation according to the obtained capacitance variation (S404).

8. The method of claim 7, wherein:
the performing the authentication to the obtained fingerprint analysis result (S403) comprises:
comparing the obtained fingerprint analysis result with pre-stored fingerprint data so as to determine an identity of a current user; and
the judging whether the cover glass (20) receives a touch key operation according to the obtained capacitance variation (S404) comprises:
judging whether the obtained capacitance variation exceeds a predefined value, and determining that the cover glass receives a touch key operation when the capacitance variation exceeds the predefined value.

9. A computer program including instructions, which when being executed on a processor of a terminal performs the method for implementing touch key and fingerprint identification according to any of claims 6-8.

## Patentansprüche

1. Vorrichtung zum Implementieren einer Berührungstasten- und Fingerabdruck-Identifizierung, umfassend:
einen Fingerabdruck-Identifizierungssensor (21), der zum Erfassen von Fingerabdruckinformationen verwendet wird, die auf einem Abdeckglas (20) einer Endgerätvorrichtung hinterlassen werden,
einen Fingerabdruck-Identifizierungsschaltkreis (22), der mit dem Fingerabdruck-Identifizierungssensor (21) verbunden ist und, der zum Analysieren und Verarbeiten der durch den Fingerabdruck-Identifizierungssensor (22) erfassten Fingerabdruckinformationen verwendet wird, um ein Fingerabdruckanalyseergebnis zu erhalten,
einen kapazitiven Berührungssensor (23), der zum Erfassen einer auf dem Abdeckglas (20) generierten Kapazität verwendet wird,
einen kapazitiven Berührungsschaltkreis (24), der mit dem kapazitiven Berührungssensor (23) verbunden ist und zum Analysieren der durch den kapazitiven Berührungssensor (23) erfassten Kapazität verwendet wird, um eine Kapazitätsveränderung zu erhalten, und
einen Schalter (25), der dafür verwendet wird, den Fingerabdruck-Identifizierungssensor (21) und den Fingerabdruck-Identifizierungsschaltkreises (22) einzuschalten und den kapazitiven Berührungssensor (23) und den kapazitiven Berührungsschaltkreis (24) zu trennen, wenn ein Einschaltsignal empfangen wird, und den kapazitiven Berührungssensor (23) und den kapazitiven Berührungsschaltkreis (24) einzuschalten und den Fingerabdruck-Identifizierungssensor (21) und den Fingerabdruck-Identifizierungsschaltkreis (22) zu trennen, wenn ein Trennungssignal empfangen wird,
**dadurch gekennzeichnet, dass**:
der Fingerabdruck-Identifizierungssensor (21) mehrere Schichten von Schaltkreisen umfasst, die eine Abschirmungsfunktion bereitstellen, die kapazitive Berührungssignale reduziert, wobei die mehreren Schichten von Schaltkreisen in einem Float-Status sind, wenn der Schalter (25) das Trennungssignal empfängt,
der Fingerabdruck-Identifizierungssensor (21) unter dem Abdeckglas (20) angeordnet ist,
der kapazitive Berührungssensor (23) ein hohes Signal-Rausch-Verhältnis (Signal-Noise-Ratio, SNR) hat, und
der kapazitive Berührungssensor (23) unter dem Fingerabdruck-Identifizierungssensor (21) angeordnet ist.

2. Vorrichtung nach Anspruch 1, ferner umfassend:
einen Host-Prozessor (26), der eine Reihenschleife mit dem Fingerabdruck-Identifizierungsschaltkreis (22) und dem Fingerabdruck-Identifizierungssensor (21) bildet und dafür verwendet wird, das Einschaltsignal oder das Trennungssignal an den Schalter (26) zu senden und eine Authentifizierung gemäß dem durch den Fingerabdruck-Identifizierungsschaltkreis (22) erhaltenen Fingerabdruckanalyseergebnis vorzunehmen, und mit dem kapazitiven Berührungsschaltkreis (24) verbunden ist und dafür verwendet wird, gemäß der durch den kapazitiven Berührungsschaltkreis (24) erhaltenen Kapazitätsveränderung zu beurteilen, ob das Abdeckglas (20) eine Berührungstastenoperation empfängt.

3. Vorrichtung nach Anspruch 2, wobei
der Host-Prozessor (26) umfasst:
eine Kommunikationsschnittstelle, die dafür verwendet wird, das Einschaltsignal oder das Trennungssignal an den Schalter (25) zu senden,
einen ersten Prozessor, der eine Reihenschleife mit dem Fingerabdruck-Identifizierungsschaltkreis (22) und dem Fingerabdruck-Identifizierungssensor (21) bildet und dafür verwendet wird, das durch den Fingerabdruck-Identifizierungsschaltkreis (22) erhaltene Fingerabdruckanalyseergebnis mit zuvor gespeicherten Fingerabdruckdaten zu vergleichen, um eine Identität eines momentanen Nutzers zu bestimmen, und
einen zweiten Prozessor, der mit dem kapazitiven Berührungsschaltkreis (24) verbunden ist und dafür verwendet wird zu beurteilen, ob die durch den kapazitiven Berührungsschaltkreis (24) erhaltene Kapazitätsveränderung einen zuvor festgelegten Wert überschreitet, und zu bestimmen, dass das Abdeckglas (20) eine Berührungstastenoperation empfängt, wenn die Kapazitätsveränderung den zuvor festgelegten Wert überschreitet.

4. Vorrichtung nach einem der Ansprüche 1 bis 3, wobei,
wenn der Fingerabdruck-Identifizierungssensor (21) und der Fingerabdruck-Identifizierungsschaltkreis (22) getrennt werden, der Fingerabdruck-Identifizierungssensor (21) in einem Float-Status ist.

5. Endgerätvorrichtung, die die Vorrichtung zum Implementieren einer Berührungstasten- und Fingerabdruck-Identifizierung nach einem der Ansprüche 1 - 4 umfasst.

6. Verfahren zum Implementieren einer Berührungstasten- und Fingerabdruck-Identifizierung, umfassend:
wenn ein Schalter (25) ein Einschaltsignal empfängt, so erfasst ein Fingerabdruck-Identifizierungssensor (21) Fingerabdruckinformationen, die auf einem Abdeckglas (20) hinterlassen wurden, und ein Fingerabdruck-Identifizierungsschaltkreis (22), der mit dem Fingerabdruck-Identifizierungssensor (21) verbunden ist, analysiert und verarbeitet die erfassten Fingerabdruckinformationen, um ein Fingerabdruckanalyseergebnis zu erhalten (S401), und
wenn der Schalter (25) ein Trennungssignal empfängt, so erfasst ein kapazitiver Berührungssensor (23) eine auf dem Abdeckglas (20) generierte Kapazität, und ein kapazitiver Berührungsschaltkreis (24), der mit dem kapazitiven Berührungssensor (23) verbunden ist, analysiert die erfasste Kapazität, um eine Kapazitätsveränderung zu erhalten (S402),
**dadurch gekennzeichnet, dass**:
der Fingerabdruck-Identifizierungssensor (21) mehrere Schichten von Schaltkreisen umfasst, die eine Abschirmungsfunktion bereitstellen, die kapazitive Berührungssignale reduziert, wobei die mehreren Schichten von Schaltkreisen in einem Float-Status sind, wenn der Schalter (25) das Trennungssignal empfängt,
der Fingerabdruck-Identifizierungssensor (21) unter dem Abdeckglas (20) angeordnet ist,
der kapazitive Berührungssensor (23) ein hohes Signal-Rausch-Verhältnis (Signal-Noise-Ratio, SNR) hat, und
der kapazitive Berührungssensor (23) unter dem Fingerabdruck-Identifizierungssensor (21) angeordnet ist.

7. Verfahren nach Anspruch 6, umfassend:
Ausführen einer Authentifizierung an dem erhaltenen Fingerabdruckanalyseergebnis (S403) und
Beurteilen, gemäß der erhaltenen Kapazitätsveränderung, ob das Abdeckglas (20) eine Berührungstastenoperation empfängt (S404).

8. Verfahren nach Anspruch 7, wobei:
das Ausführen der Authentifizierung an dem erhaltenen Fingerabdruckanalyseergebnis (S403) umfasst:
Vergleichen des erhaltenen Fingerabdruckanalyseergebnisses mit zuvor gespeicherten Fingerabdruckdaten, um eine Identität eines momentanen Nutzers zu bestimmen, und
das Beurteilen, gemäß der erhaltenen Kapazitätsveränderung, ob das Abdeckglas (20) eine Berührungstastenoperation empfängt (S404), umfasst:
Beurteilen, ob die erhaltene Kapazitätsveränderung einen zuvor festgelegten Wert überschreitet, und Bestimmen, dass das Abdeckglas eine Berührungstastenoperation empfängt, wenn die Kapazitätsveränderung den zuvor festgelegten Wert überschreitet.

9. Computerprogramm, das Instruktionen enthält, die, wenn sie auf einem Prozessor eines Endgerätes ausgeführt werden, das Verfahren zum Implementieren einer Berührungstasten- und Fingerabdruck-Identifizierung nach einem der Ansprüche 6 - 8 ausführen.

## Revendications

1. Appareil pour la mise en oeuvre d'une identification de touche tactile et d'empreintes digitales, comprenant :
un capteur d'identification d'empreintes digitales (21) utilisé pour collecter des informations d'empreintes digitales appliquées sur un verre de protection (20) d'un dispositif terminal ;
un circuit d'identification d'empreintes digitales (22) connecté au capteur d'identification d'empreintes digitales (21) et utilisé pour analyser et traiter les informations d'empreintes digitales collectées par le capteur d'identification d'empreintes digitales (22) pour obtenir un résultat d'analyse d'empreintes digitales ;
un capteur tactile capacitif (23) utilisé pour collecter une capacité générée sur le verre de protection (20) ;
un circuit tactile capacitif (24) connecté au capteur tactile capacitif (23) et utilisé pour analyser la capacité collectée par le capteur tactile capacitif (23) pour obtenir une variation de capacité ; et
un commutateur (25) utilisé pour commander la mise en marche du capteur d'identification d'empreintes digitales (21) et du circuit d'identification d'empreintes digitales (22) et commander la déconnexion du capteur tactile capacitif (23) et du circuit tactile capacitif (24) lors de la réception d'un signal de mise en marche ; et commander la mise en marche du capteur tactile capacitif (23) et du circuit tactile capacitif (24) et commander la déconnexion du capteur d'identification d'empreintes digitales (21) et du circuit d'identification d'empreintes digitales (22) lors de la réception d'un signal d'arrêt ;
**caractérisé en ce que** :
ledit capteur d'identification d'empreintes digitales (21) comprend des couches multiples de circuits fournissant une fonction de blindage réduisant des signaux tactiles capacitifs, lesdites couches multiples de circuits étant dans un état flottant lorsque le commutateur (25) reçoit le signal d'arrêt ;
ledit capteur d'identification d'empreintes digitales (21) est fourni au-dessous dudit verre de protection (20) ;
ledit capteur tactile capacitif (23) possède un rapport signal sur bruit, SNR, élevé ; et
ledit capteur tactile capacitif (23) est fourni au-dessous dudit capteur d'identification d'empreintes digitales (21).

2. Appareil selon la revendication 1, comprenant en outre :
un processeur hôte (26) formant une boucle en série avec le circuit d'identification d'empreintes digitales (22) et le capteur d'identification d'empreintes digitales (21), et utilisé pour envoyer le signal de mise en marche ou le signal d'arrêt au commutateur (26) et réaliser une authentification en fonction du résultat d'analyse d'empreintes digitales obtenu par le circuit d'identification d'empreintes digitales (22) ; et connecté au circuit tactile capacitif (24) et utilisé pour évaluer si le verre de protection (20) reçoit une opération de touche tactile en fonction de la variation de capacité obtenue par le circuit tactile capacitif (24).

3. Appareil selon la revendication 2 dans lequel,
le processeur hôte (26) comprend :
une interface de communication utilisée pour envoyer le signal de mise en marche ou le signal d'arrêt au commutateur (25) ;
un premier processeur formant une boucle en série avec le circuit d'identification d'empreintes digitales (22) et le capteur d'identification d'empreintes digitales (21) et utilisé pour comparer le résultat d'analyse d'empreintes digitales obtenu par le circuit d'identification d'empreintes digitales (22) avec des données d'empreintes digitales pré-stockées afin de déterminer une identité d'un utilisateur actuel ; et
un second processeur connecté au circuit tactile capacitif (24) et utilisé pour évaluer si la variation de capacité obtenue par le circuit tactile capacitif (24) dépasse une valeur prédéfinie et déterminer que le verre de protection (20) reçoit une opération de touche tactile lorsque la variation de capacité dépasse la valeur prédéfinie.

4. Appareil selon l'une quelconque des revendications 1 à 3, dans lequel,
lorsque le capteur d'identification d'empreintes digitales (21) et le circuit d'identification d'empreintes digitales (22) sont déconnectés, le capteur d'identification d'empreintes digitales (21) est dans un état flottant.

5. Dispositif terminal, comprenant l'appareil pour la mise en oeuvre d'une identification de touche tactile et d'empreintes digitales selon l'une quelconque des revendications 1 à 4.

6. Procédé pour la mise en oeuvre d'une identification de touche tactile et d'empreintes digitales comprenant :
lorsqu'un commutateur (25) reçoit un signal de mise en marche, un capteur d'identification d'empreintes digitales (21) collecte des informations d'empreintes digitales appliquées sur un verre de protection (20), et un circuit d'identification d'empreintes digitales (22) connecté au capteur d'identification d'empreintes digitales (21) analyse et traite les informations d'empreintes digitales collectées pour obtenir un résultat d'analyse d'empreintes digitales (S401) ; et
lorsque le commutateur (25) reçoit un signal d'arrêt, un capteur tactile capacitif (23) collecte une capacité générée sur le verre de protection (20) et un circuit tactile capacitif (24) connecté au capteur tactile capacitif (23) analyse la capacité collectée pour obtenir une variation de capacité (S402) ;
**caractérisé en ce que** :
ledit capteur d'identification d'empreintes digitales (21) comprend des couches multiples de circuits fournissant une fonction de blindage réduisant des signaux tactiles capacitifs, lesdites couches multiples de circuits étant dans un état flottant lorsque le commutateur (25) reçoit le signal d'arrêt ;
ledit capteur d'identification d'empreintes digitales (21) est fourni au-dessous dudit verre de protection (20) ;
ledit capteur tactile capacitif (23) a un rapport signal sur bruit, SNR, élevé ; et
ledit capteur tactile capacitif (23) est fourni au-dessous dudit capteur d'identification d'empreintes digitales (21).

7. Procédé selon la revendication 6, comprenant :
la réalisation d'une authentification sur le résultat d'analyse d'empreintes digitales obtenu (S403) ; et
le fait d'évaluer si le verre de protection (20) reçoit une opération de touche tactile en fonction de la variation de capacité obtenue (S404).

8. Procédé selon la revendication 7, dans lequel :
la réalisation de l'authentification sur le résultat d'analyse d'empreintes digitales obtenu (S403) comprend :
la comparaison du résultat d'analyse d'empreintes digitales obtenu avec des données d'empreintes digitales pré-stockées afin de déterminer une identité d'un utilisateur actuel ; et
le fait d'évaluer si le verre de protection (20) reçoit une opération de touche tactile en fonction de la variation de capacité obtenue (S404) comprend :
le fait d'évaluer si la variation de capacité obtenue dépasse une valeur prédéfinie et la détermination que le verre de protection reçoit une opération de touche tactile lorsque la variation de capacité dépasse la valeur prédéfinie.

9. Programme informatique incluant des instructions qui, lorsqu'elles sont exécutées sur un processeur d'un terminal, réalise le procédé pour la mise en oeuvre d'une identification de touche tactile et d'empreintes digitales selon l'une quelconque des revendications 6 à 8.
